## Europäisches Patentamt
## European Patent Office
## Office européen des brevets

(19)

(11) Veröffentlichungsnummer: **0 205 912**
**B1**

(12)
# EUROPÄISCHE PATENTSCHRIFT

(45) Veröffentlichungstag der Patentschrift:
20.04.88

(51) Int. Cl.⁴: **H 01 B 1/12**

(21) Anmeldenummer: 86106765.0

(22) Anmeldetag: **17.05.86**

(54) Verfahren zur Herstellung von p-gedopten Polyheterocyclen mit optisch aktiven Gegenionen.

(30) Priorität: **25.05.85 DE 3518886**

(43) Veröffentlichungstag der Anmeldung:
**30.12.86 Patentblatt 86/52**

(45) Bekanntmachung des Hinweises auf die Patenterteilung:
**20.04.88 Patentblatt 88/16**

(84) Benannte Vertragsstaaten:
**BE DE FR GB NL**

(56) Entgegenhaltungen:
**EP - A - 0 045 366**
**EP - A - 0 180 082**
**FR - A - 2 281 370**

(73) Patentinhaber: **BASF Aktiengesellschaft,
Carl-Bosch-Strasse 38, D-6700 Ludwigshafen (DE)**

(72) Erfinder: **Naarmann, Herbert, Dr., Haardtblick 15,
D-6719 Wattenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft elektrisch leitfähige Homo- und Copolymerisate von Verbindungen aus der Klasse der 5-gliedrigen hererocyclischen Verbindungen mit einem konjugierten π-Elektronensystem, die Stickstoff, Sauerstoff oder Schwefel als Heteroatom enthalten, die Anionen von Leitsalzen als Gegenionen enthalten sowie ein Verfahren zu deren Herstellung. Die so erhaltenen erfindungsgemässen Polymeren, die eine hohe elektrische Leitfähigkeit und ein hohes mechanisches Niveau haben, besitzen weitere vorteilhafte anwendungstechnische Eigenschaften.

Aus der DE-OS 32 23 544 (=EP-OS 99.984) ist ein Verfahren zur Herstellung elektrisch leitfähiger Copolymerisate von Pyrrol mit anderen heterocyclischen Verbindungen wie Thiophen oder Furan und deren Derivate bekannt. Die Polymerisation wird in Gegenwart von Leitsalzen durchgeführt, so dass man p-gedopte Polymerisate erhält mit hoher elektrischer Leitfähigkeit und einem hohen mechanischen Niveau, die gegenüber bekannten elektrisch leitfähigen Pyrrolpolymersystemen ein verbessertes Eigenschaftsbild aufweisen.

Aufgabe der vorliegenden Erfindung ist es, neue weitere Homo- und Copolymerisate von Verbindungen aus der Klasse von 5-gliedrigen heterocyclischen Verbindungen aufzuzeigen, die neben einer hohen elektrischen Leitfähigkeit und einem hohen mechanischen Niveau weitere wertvolle Eigenschaften besitzen.

Es wurde nun gefunden, dass die Aufgabe durch elektrisch leitfähige Homo- und Copolymerisation von Verbindungen aus der Klasse 5-gliedriger heterocyclischer Verbindungen mit einem konjugierten π-Elektronensystem, die Stickstoff, Sauerstoff oder Schwefel als Heteroatom enthalten, gelöst wird, wenn die Polymerisate als Gegenion das Anion einer optisch aktiven organischen Säure enthalten.

Weitere Gegenstände der Erfindung sind die Herstellung derartiger Polymerisate und ihre Verwendung als Leiter in der Elektrotechnik oder zum Trennen von Racematen.

Unter Verbindungen aus der Klasse der 5-gliedrigen heterocyclischen Verbindungen mit einem konjugierten π-Elektronensystem, die Stickstoff, Sauerstoff oder Schwefel als Heteroatom enthalten, werden im Rahmen dieser Erfindung Verbindungen aus der Klasse der Pyrrole, der Thiophene und der Furane verstanden.

Verbindungen aus der Klasse der Pyrrole sind das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole. Bei der Herstellung der erfindungsgemässen Copolymeren können die Pyrrole allein oder in Mischung miteinander eingesetzt werden, so dass die Copolymere ein oder mehrere verschiedene Pyrrole eingebaut enthalten können. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Verbindungen aus der Klasse der Thiophene sind das unsubstituierte Thiophen selbst, das 2-, oder 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene, wie 2-Chlor- oder 3-Bromthiophen, 3,4-Dichlorthiophen. Ebenso kommen Phenylthiophene, wie 2-Phenylthiophen oder das 3-Benzylthiophen in Frage.

Verbindungen aus der Klasse der Furane sind das unsubstituierte Furan selbst als auch die substituierten Furane, wie Alkylfurane, z.B. 3-Methyl-, 2-Ethyl- oder 3-Ethyl-, ausserdem 2,2-Dimethyl- oder 2,3-Diethyl-Furan, sowie chlorsubstituierte Furane, wie 2-Chlorfuran, 3-Bromfuran oder 3-Dichlorfuran, ebenso 3,4-Difurylfuran oder das 2-Phenylfuran. Bevorzugt ist das unsubstituierte Furan selbst.

Die obengenannten 5-gliedrigen heterocyclischen Verbindungen mit konjugiertem π-Elektronensystem können aber auch mit bis zu 20 Gew.-% anderen mit diesen Verbindungen copolymerisierbaren Verbindungen copolymerisiert werden. Solche Verbindungen sind z.B. das Thiazol, das Oxyzol, das Imidazol. Weiterhin kommen als Comonomeren Aminophenanthren, Benzidin, Anilin, Aminochrysen und/oder Aminocarbazol in Frage.

Zur Herstellung der Homo- und Copolymeren der Verbindungen aus der Klasse der 5-gliedrigen Heterocyclen werden die Monomeren, das sind die Pyrrole, Thiophene oder Furane und gegebenenfalls die Comonomeren, in einem Elektrolytlösungsmittel in Gegenwart des Leitsalzes anodisch oxidiert und dabei polymerisiert. Die Gesamtmonomer-Konzentration beträgt hierbei im allgemeinen zwischen 0,01 bis 1 Mol pro Liter Lösungsmittel.

Das erfindungsgemässe Verfahren wird in Elektrolytlösungsmitteln, die die Monomeren und die Leitsalze zu lösen vermögen, durchgeführt. Wenn mit Wasser mischbare organische Lösungsmittel Einsatz finden, kann zur Erhöhung der elektrischen Leitfähigkeit eine geringe Menge an Wasser, im allgemeinen bis zu 3 Gew.-%, bezogen auf das organische Lösungsmittel, zugesetzt werden, auch wenn in der Regel in einem wasserfreien System und insbesondere auch ohne Zusatz von alkalisch machenden Verbindungen gearbeitet wird. Das Lösungsmittel selbst kann protisch oder aprotisch sein. Bevorzugte Elektrolytlösungsmittel sind z.B. Aceton, Acetonitril, Dimethylformamid, Dimethylsulfoxid, Methylenchlorid, N-Methylpyrrolidon oder Propylencarbonat.

Als Leitsalze werden erfindungsgemäss optisch aktive organische Säuren oder deren Salze verwendet. Geeignet sind z.B. (+)Camphersulfonsäure, (+)Bromcamphersulfonsäure, Weinsäure,

2,2-Paracyclophancarbonsäure, 2,3-Paracyclophancarbonsäure, 2,3-seco-Cholestanon-(6)-disäure-(2,3); weitere Verbindungen siehe Lit. Stereochemistry Georg Thieme Verlag Stuttgart 1944, Vol. 4, Carbonsäure S. 24/25, Sulfonsäuren S. 414/419.

Die Salze der Säuren können als Kation z.B. $H^+$, $Na^+$, $K^+$, $NH_4^+$ oder $Mg^{++}1/2$, $Y^+$ kann aber auch $N^+R^4$ oder $N^+R^3H$ sein, wobei $R=CH_3$, $C_2H_5$, $C_4H_9$ bis $C_{20}H_{41}$ enthalten.

Ausser den optisch aktiven Säuren können auch bis zu 75 Gew.-%, vorzugsweise bis zu 25 Gew.-%, bezogeben auf die Säuren andere bekannte Leitsalze zugegen sein. Solche bekannten Leitsalze sind z.B. $NaClO_4$, $KBF_4$ oder $LiBF_4$, $N(C_4H_9)_4$, $PF_6$.

Die Leitsalzkonzentration beträgt in dem erfindungsgemässen Verfahren im allgemeinen 0,001 bis 1, vorzugsweise 0,01 bis 0,1 Mol/Liter.

Bei dem Verfahren zur Herstellung der Polymeren aus der Klasse der 5-gliedrigen Heterocyclen wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Nickel, Titan, Aluminium, Edelstahl oder auch aus gefüllten leitfähigen Polymeren oder auch aus C-Faser-Geweben bestehen oder aus Graphit sein; auch Edelmetallelektroden, bevorzugt Platinelektroden, können verwendet werden. Dabei ist es günstig, wenn zumindest die Anode, insbesondere aber beide Elektroden, flächig ausgebildet sind. In einer besonderen Ausgestaltungsform des erfindungsgemässen Verfahren kann die Anode auch aus einem elektrisch leitfähigen Polymeren gebildet werden, wie z.B. aus durch anodische Oxidation hergestellten Polypyrrol, dotiertem p-leitenden Polyacetylen oder dotiertem, p-leitendem Polyphenylen. In diesem Fall werden die Pyrrole und die Aminoaromaten auf die im allgemeinen filmförmigen leitenden Polymeren aufpolymerisiert.

Je nach Verfahrensführung können unterschiedliche Typen von Homo- und Copolymeren erhalten werden.

Ausser der erwähnten einfachen elektrolytischen Zelle ohne Diaphragma können auch andere Elektrolyseeinrichtungen für das erfindungsgemässe Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (Amp/s) zweckmässig.

Auch die filmförmige kontinuierliche Abscheidung von Verbindungen aus der Klasse der Pyrrole auf einer rotierenden Anode oder auf einem kontinuierlich laufendem Band ist eine bevorzugte Ausführungsform.

Normalerweise führt man die elektrolytische Oxidation bei Raumtemperatur und unter Inertgas durch. Da sich die Reaktionstemperatur bei der Polymerisation der Pyrrole als unkritisch erwiesen hat, kann die Temperatur jedoch in einem breiten Bereich variiert werden, solange die Erstarrungstemperatur bzw. Siedetemperatur des Elektrolytlösungsmittels nicht unter- bzw. überschritten wird. Im allgemeinen hat sich eine Reaktionstemperatur im Bereich von −40 bis +40° C, vorzugsweise bei +18 bis +25° C, als sehr vorteilhaft erwiesen.

Als Stromquelle für den Betrieb der elektrolytischen Zelle, in der das erfindungsgemässe Verfahren durchgeführt wird, eignet sich jede Gleichstromquelle, wie z.B. eine Batterie, die eine hinreichend hohe elektrische Spannung liefert. Zweckmässigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 mA/cm², vorzugsweise im Bereich von 0,1 bis 15 mA/cm².

Die während der elektrolytischen Oxidation anodisch abgeschiedenen erfindungsgemässe Polymeren werden zur Entfernung von anhaftendem Leitsalz mit Lösungsmitteln gewaschen und bei Temperaturen von 30 bis 150° C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymere leicht von der Elektrode ablösen, vor allem wenn Schichtstärken über 50 μm abgeschieden wurden. Werden als Anoden-Material leitfähige, filmförmige Polymere eingesetzt, so werden, wie erwähnt, die erfindungsgemäss eingesetzten Monomeren auf das polymere Elektrodenmaterial aufpolymerisiert, so dass man in diesem Fall ein Copolymer erhält, in dem das als Anode benutzte Polymere mit eingebaut ist.

Bei den durch das erfindungsgemässe Verfahren erhaltenen Polymerisaten der 5-gliedrigen Heterocyclen handelt es sich um elektrisch hochleitfähige Systeme, die die anionen oder optisch aktiven Säuren fest im System eingebaut enthalten. Man kann die erfindungsgemässen Homo- und Copolymeren daher auch als Komplexe aus Kation der Polymeren mit optisch aktiven Gegenanionen bezeichnen. Die Polymeren der Erfindung besitzen ein hohes mechanisches Niveau und ein insgesamt ausgewogenes besseres Eigenschaftsbild. Die Polymerfilme sind elastisch. Die erfindungsgemässen Copolymerisate eignen sich daher insbesondere als Leiter oder als Elektroden in der Elektrotechnik. Die Polymeren haben elektrische Leitfähigkeiten, die zwischen 50 und 250 S/cm² liegen. Sie zeichnen sich auch insbesondere dadurch aus, dass sie zum Trennen von Racematen optisch aktiver Säuren verwendet werden können. Dies kann derart geschehen, dass man eine Säure mit feinteiligem Polymerisat füllt.

Die im Beispiel genannten Teile sind Gewichtsteile.

*Beispiel 1:*

Es wird eine Lösung aus 5 Teilen Pyrrol, 400 Teilen Acetonitril und 2,5 Teilen des Triethylammoniumsalzes der (+)Camphersulfonsäure hergestellt. Als Elektroden dienen Nickelbleche, die in 2 cm Abstand angeordnet sind. Die Polymerisation wird für die Dauer von 45 Minuten durchgeführt. Die verwendete Stromdichte beträgt 2 mA/cm². Es werden 1,85 Teile eines Filmes erhalten, der 35 μm dick und besonders elastisch ist. Die Leitfähigkeit des Filmes beträgt 85 S/cm². Der Film ist optisch aktiv.

*Beispiel 2:*

Entsprechend U.S. Patent 446,829 (Beispiel 1) wird ein kontinuierlicher Polypyrrol-Film, jedoch mit (+)Bromcamphersulfonsäure als Gegenion (statt Phenylsulfonsäure) hergestellt. Die Leitfähigkeit beträgt 80 S/cm.

*Beispiel 3:*

Man arbeitet wie in Beispiel 1, aber es wird statt Pyrrol N-Methylpyrrol verwendet. Die Leitfähigkeit beträgt 0,9 S/cm.

*Beispiel 4:*

Man arbeitet wie in Beispiel 1, aber es wird statt Pyrrol eine Mischung aus Furan/N-Methylpyrrol (Verhältnis-Gewicht 1:1) verwendet. Die Leitfähigkeit beträgt $0,1 \cdot 10^{+1}$ S/cm.

*Beispiel 5:*

Der nach Beispiel 2 kontinuierlich hergestellte Polypyrrol-Film wird aufgerollt und als Füllung in eine Säule von 1 m Länge und 3 cm (innerem) Durchmesser gegeben. Dann wird diese gefüllte Säule mit einer 0,01 molaren Lösung von Ephedrin (wässrig)-Racemat beschickt. Das Eluat enthält eine Anreicherung des (+)Ephedrins im Verhältnis 19:1.

## Patentansprüche

1. Elektrisch leitfähige p-gedopte Homo- und Copolymerisate von Verbindungen aus der Klasse der 5-gliedrigen heterocyclischen Verbindungen mit konjugiertem π-Elektronensystem, die Stickstoff, Sauerstoff oder Schwefel als Heteroatom enthalten, dadurch gekennzeichnet, dass die Polymerisate als Gegenion das Anion einer optisch aktiven organischen Säure enthalten.

2. Verfahren zur Herstellung von elektrisch leitfähigen Homo- und Copolymerisaten von Verbindungen aus der Klasse der 5-gliedrigen heterocyclischen Verbindungen mit einem konjugierten π-Elektronensystem, die Stickstoff, Sauerstoff oder Schwefel als Heteroatom enthalten, durch elektrochemische Oxidation dieser Verbindungen oder von Mischungen dieser Verbindungen in Elektrolytlösungsmitteln in Gegenwart von Leitsalzen, dadurch gekennzeichnet, dass man als Leitsalze optisch aktive organische Säuren oder deren Salze verwendet.

3. Verwendung von Polymerisaten, hergestellt nach Anspruch 1, als Leiter in der Elektrotechnik.

4. Verwendung von Polymerisaten nach Anspruch 1, zum Trennen von Racematen.

## Claims

1. An electroconductive p-doped homopolymer or copolymer of a compound of the class of the 5-membered heterocyclic compounds having conjugated π-electron systems and containing nitrogen, oxygen or sulfur as hetero atom, which contains the anion of an optically active organic acid as counterion.

2. A process for preparing an electroconductive homopolymer or copolymer of a compound of the class of the 5-membered heterocyclic compounds having a conjugated π-electron system and containing nitrogen, oxygen or sulfur as hetero atom, by electrochemical oxidation of one or more such compounds in an electrolyte solvent in the presence of a conductive salt, which comprises using as the conductive salt an optically organic acid or a salt thereof.

3. The use of a polymer prepared as claimed in claim 1, as a conductor in electrotechnology.

4. The use of a polymer as claimed in claim 1 for separating a racemate.

## Revendications

1. Homo- et copolymères à dopage P, électriquement conducteurs, formés de composés de la classe des composés hétérocycliques pentagonaux à système d'électrons π conjugé, qui contiennent de l'azote, de l'oxygène ou du soufre en tant qu'hétéroatome, caractérisés en ce que les polymères contiennent, en tant que contre-ion, l'anion d'un acide organique optiquement actif.

2. Procédé pour la préparation d'homo- et copolymères électriquement conducteurs, formés de composés de la classe des composés hétérocycliques pentagonaux à système d'électrons π conjugué, qui contiennent de l'azote, de l'oxygène ou du soufre en tant qu'hétéroatome, par oxydation électrochimique de ces composés ou de mélanges de ces composés dans des solvants d'électrolytes en présence de sels conducteurs, caractérisé en ce qu'on utilise, comme sels conducteurs, des acides organiques optiquement actifs ou leurs sels.

3. Utilisation de polymères, préparés selon la revendication 2, comme conducteurs dans l'électrotechnique.

4. Utilisation de polymères selon la revendication 1 pour la séparation de racémates.